# EUROPEAN PATENT SPECIFICATION

(11) **EP 3 737 025 B1**
(45) Date of publication and mention of the grant of the patent: **27.10.2021**
(21) Application number: 20171963.0
(22) Date of filing: 29.04.2020
(51) Int. Cl.: H04L 5/00, H04L 27/26, H04L 27/00

(54) **DOWNLINK CONTROL CHANNEL ARRANGEMENT FOR BEYOND 52.6 GHZ**
DOWNLINK-STEUERKANALANORDNUNG FÜR MEHR ALS 52,6 GHZ
AGENCEMENT DE CANAL DE COMMANDE DE LIAISON DESCENDANTE POUR AU-DELÀ DE 52,6 GHZ

(30) Priority: 07.05.2019 US 201962844289 P
(43) Date of publication of application: 11.11.2020
(73) Proprietor: Nokia Technologies Oy, 02610 Espoo (FI)
(72) Inventor: PAJUKOSKI, Kari, 90240 Oulu (FI); HOOLI, Kari, 90450 Oulu (FI); TIIROLA, Esa, 90620 Oulu (FI)
(74) Representative: Roberts, David

(56) References cited:
- US-A1- 2018 287 762
- US-A1- 2018 294 916
- US-A1- 2019 110 277
- QUALCOMM INCORPORATED: "DL signals and channels for NR-U", 3GPP DRAFT; R1-1807387 7.6.3.1 DL SIGNALS AND CHANNELS FOR NR-U, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE , vol. RAN WG1, no. Busan, Korea; 20180521 - 20180525 20 May 2018 (2018-05-20), XP051442579, Retrieved from the Internet: URL:http://www.3gpp.org/ftp/Meetings%5F3GP P%5FSYNC/RAN1/Docs/ [retrieved on 2018-05-20]

## Description

### TECHNICAL FIELD

This disclosure concerns downlink (DL) control channel design for above 52.6 GHz scenarios. More specifically, the disclosure defines a system which allows power-efficient single-carrier properties for a physical downlink control channel (PDCCH), while maintaining an option to use legacy orthogonal frequency division multiplex (OFDM).

### BACKGROUND

New radio (NR) Release 15 (Rel-15) defines operation for frequencies up to 52.6GHz. 5^{th} Generation (5G) NR Rel-15 physical layer channels were designed and optimized for under 52.6 GHz. Higher frequencies contain very large spectrum allocations, and will support many high-capacity use cases. 5G NR beyond 52.6 GHz spectrum ranges, use cases, deployment scenarios and requirements are currently being discussed in 3^{rd} Generation Partnership Project (3GPP) radio access network (RAN), and will eventually be standardized in a Releases 17/18 (Rel-17/18) time frame. Spectrum options for an NR beyond 52.6 GHz study have recently been discussed. Potential high mm-wave bands for 5G and beyond systems are 70/80/92 to 114 GHz. Future extensions are also possible.

Ongoing studies for NR beyond 52.6 GHz have these objectives: waveform design for operation beyond 52.6GHz, and study of physical layer design for above 52.6GHz.

The design should take the following aspects into consideration: efficient transceiver design, including power efficiency and complexity; improvement of coverage to cope with extreme propagation loss; and inheriting physical layer channel design for below 52.6 GHz from NR Rel-15 design whenever applicable.

Next generation systems for above 52.6 GHz will have to cope with increased path loss, larger antenna arrays, and less efficient radio frequency (RF) components, like power amplifiers (PAs). Hence, systems above 52.6 GHz will likely be more noise-limited, especially at cell edge, which will drive the need to obtain more power from the PAs. Single-carrier (SC) waveforms are preferred over OFDM because of their low peak-to-average power ratio (PAPR) properties. The low PAPR waveform enables the PAs to be run at a higher power to maintain coverage. However, as with NR Rel-15 uplink (UL), the CP-OFDM (cyclic prefix OFDM) modulation would still be beneficial for non-power-limited user equipments (UEs). Thus, it is likely that the SC-based waveform will also be standardized for downlink to maximize coverage and power amplifier efficiency, while the legacy OFDM will remain supported in parallel for high throughput for UEs in favorable radio propagation conditions.

The NR PDCCH is used to schedule uplink and downlink data channels. Information carried on PDCCH is called downlink control information (DCI). To receive DCI on NR PDCCH, a UE monitors a set of PDCCH candidates in the one or more configured monitoring occasions in one or more configured COntrol REsource SETs (CORESETs) according to the search space configurations. One search space contains one or multiple PDCCH candidates with one or multiple CCE (control channel element) aggregation levels. It is noted that, in certain references (especially in RANI), the term "search space" may be called "search space set". When following this terminology, search space set with certain aggregation level may be called as a search space. The term "search space" indicating that a certain search space configuration covers one or multiple aggregation levels is used for example in RAN2 specifications (such as 3GPP TS 38.331).

One aspect of above 52.6 GHz design is that the physical layer channel design is inherited from NR Rel-15. Ideally, the legacy CP-OFDM and related physical layer channel design for below 52.6 GHz will also be reused for above 52.6 GHz scenarios. This can be achieved by means of a scalable frame structure with scalable numerology, and with new numerology options with higher subcarrier spacing, such as 960 kHz. SC waveforms can be expected to be introduced for PDSCH with relatively modest changes thanks to the inbuilt forward compatibility support of NR A problem is the high PAR (Peak-to-Average Ratio) of control channels, such as SS/PBCH (Synchronization Signal/Physical Broadcast Channel) and PDCCH, because they have been designed for OFDM. Thus, reuse of the Rel-15 OFDM-based PDCCH channel design with a SC waveform for data is not seen to be a feasible solution because coverage and power efficiency are limited by PDCCH.

While SC PDCCH needs to be supported for coverage and power efficiency, it can drastically limit the PDCCH multiplexing capacity. At an extreme, PDCCHs for different UEs may be multiplexed on in time domain. Hence, it is beneficial also to support legacy OFDM-based PDCCH in parallel for UEs in favorable propagation conditions due to capability also to multiplex PDCCHs in frequency domain.

The present invention disclosure is directed toward a system which allows power-efficient single-carrier properties for PDCCH while maintaining an option to use legacy OFDM.

It should be understood, in the discussion to follow, that the term "gNB" should be understood to mean "network node". The term "gNB" is used to denote a network node in 5G. However, it should be understood that the present invention, as described below, is not limited to 5G, but may be applicable to other generations yet to be developed. As a consequence, "gNB" should be understood more broadly as a network node.

US2018/287762A1 discloses that a base station may determine whether a control resource set (coreset), of time and frequency resources within a control region of system bandwidth and configured for a user equipment (UE), conveys a physical downlink control channel (PDCCH) via a single-carrier waveform or a multicarrier waveform, and transmit the PDCCH to the UE using the determined waveform.

US2018/294916A1 discloses that a dynamic downlink waveform switching implementation may, for example, support utilization of one or more multiple carrier (MC) waveform (e.g., OFDMA) or other high peak to average power ratio (PAPR) waveform and one or more SC (SC) waveform (e.g., discrete Fourier transform-spread-orthogonal frequency division multiplexing (DFT-S-OFDM)) or other low PAPR waveform.

US2019/110277A1 discloses that a user equipment (UE) may determine a control resource set configuration for transmissions using a single carrier waveform. The control resource set configuration may include one or more pilot regions and one or more control channel regions. The UE may monitor one or more of the pilot signal regions to identify pilot signals based at least in part on the control resource set configuration, and decode one or more control signals in the control channel regions based at least in part on the pilot signals. The control signals may be included in a control channel region associated with the pilot signal region or in a shared control channel region.

### SUMMARY

The invention is defined by the independent claims. Preferred embodiments are set out in the dependent claims.

### BRIEF DESCRIPTION OF THE DRAWINGS

The foregoing and other aspects of these teachings are made more evident in the following detailed description, when read in conjunction with the attached drawing figures.
Figure 1 shows a simplified block diagram of certain apparatus according to various exemplary embodiments of the present invention.
Figure 2 shows part of another exemplary radio network.
Figure 3 is a flow chart illustrating a method performed by a user equipment in accordance with the present disclosure.
Figure 4 is a flow chart illustrating a method performed by a base station in accordance with the present disclosure.

### DETAILED DESCRIPTION

A single-carrier waveform is power-efficient, while an OFDM waveform is capacity-efficient. The present invention defines a system which allows power-efficient single-carrier properties for PDCCH, while maintaining an option to use legacy OFDM.

As such, the present invention is directed toward a control signaling arrangement which allows both capacity-efficient frequency-domain multiplexing by using OFDM waveforms and power-efficient time-domain multiplexing by using SC waveforms. The scope of the invention is for a gNB to select the preferred PDCCH waveform type dynamically for each scheduling instant based on the traffic situation. According to the invention, the gNB can make a selection between the following PDCCH types:
- Type 1: PDCCH based on OFDM (legacy or a new) format
- Type 2: PDCCH based on single carrier format

Then the UE determines the PDCCH waveform implicitly based on PDCCH monitoring, and the PDCCH waveform so determined may indicate not only the PDCCH waveform, but also the waveform for other channel(s), such as a PDSCH waveform or a PUSCH waveform. In other words, a UE performs PDCCH monitoring according to Type 1 and Type 2. In an embodiment, the UE determines the waveform for PDCCH, PDSCH and/or PUSCH. For example,
- if Type 1 PDCCH is detected:
   o PDCCH and the related PDSCH(s) are transmitted based on OFDM (legacy) format
   o PDCCH and the related PUSCH(s) are transmitted based on OFDM (legacy) format
- if Type 2 PDCCH is detected:
   o PDCCH and the related PDSCH(s) are transmitted based on single carrier format
   o PDCCH and the related PUSCH(s) are transmitted based on single carrier format

In another embodiment, which is not according to the invention, the SC PDCCH is on a wider beam for a control channel (that is, having less antenna gain compared to PDSCH/PUSCH. This can be compensated for by means of single carrier waveform enabling higher transmit power and/or by means of lower SNR requirement for PDCCH signaling), then PDCCH and PDSCH waveforms may differ, for example, there may be SC PDCCH and OFDM PDSCH.

According to the present invention, the UE is configured with two PDCCH configurations having two separate waveforms:
- The first configuration corresponds to PDCCH Type 1: at least one search space is associated with a predefined control resource set (CORESET) characterized by:
   ∘ Frequency division multiplexing (FDM) or Time division multiplexing (TDM) between DCI and demodulation reference signal (DMRS) (FDM if Rel-15 NR legacy design is emphasized; TDM if common DMRS structure with PDCCH Type 2 is emphasized).
   ∘ Frequency division multiplexing of modulation symbols carrying downlink control information.
   ∘ Precoder cycling with a predefined granularity in frequency. The granularity means that the precoder remains constant over a predetermined set of resource elements, such as six resource element groups (REGs) and may change on the boundary of such resource element sets.
   ∘ Interleaved or non-interleaved control channel element (CCE)-to-REG mapping.
   ∘ Predefined monitoring occasions.
   ∘ Predefined aggregation levels (AL).
- The second configuration corresponds to PDCCH Type 2: at least one Search space is associated with a predefined control resource set (CORESET) characterized by:
   ∘ TDM between DCI and DMRS.
   ∘ Time division multiplexing of modulation symbols carrying downlink control information, generated, for example, by DFT-spread OFDM or by single carrier modulation.
   ∘ Single carrier (SC)-specific transmitter (TX) diversity.
   ∘ Non-interleaved CCE-to-REG mapping.
   ∘ Predefined monitoring occasions.
   ∘ Predefined ALs to monitor.

These properties, for both Type 1 and Type 2, should not be seen as restrictive elements of the configuration. For example, if Tx diversity is not used, then precoder cycling may be switched off. On the other hand, this may not be seen as a complete list illustrating all the configuration parameters of the related CORESET/search space. Parameters related to the waveform selection have been emphasized

In a preferred embodiment, there is a smooth coexistence of SC- and OFDM-based PDCCH structures. At least certain CORESET properties are common for two PDCCH structures, regardless of the differences of the waveform and the related multiplex (MUX) requirements. For example, subcarrier spacing may be common for two PDCCH structures.

In a preferred embodiment, monitoring occasions related to the first configuration and the second configuration overlap at least partially. A benefit of this approach is an opportunity for hardware reuse, for example, the UE can process SC- and OFDM-based PDCCH based on common FFT processing.

There can be different levels of coexistence:
- Resource elements of the CORESET corresponding to the first configuration and the second configuration can be the same. When this happens, the associated CORESETs occupy, at least partially, the same resource elements of the slot. The first and second search spaces are configured with monitoring occasions taking place on the same slot(s). For example, they may have the same slot-offset and periodicity configured. On the other hand, the monitoring configuration may not need to be exactly the same. For example, every second monitoring occasions may overlap (assuming that one configuration has more frequent monitoring).
- CORESETs related to two PDCCH configurations can overlap, partially or completely, in time and/or in frequency.
- Two CORESETs may have a common DMRS structure.
- Two CORESETs may have common REG/CCE structure.

According to the invention, a new CORESET structure, which provides smooth coexistence Type 1 and Type 2 PDCCH, is defined. This third resource set is a CORESET supporting both SC-FDM and OFDM. The 3^{rd} CORESET is characterized by a common DMRS structure for both SC-FDM and OFDM, and can be characterized by one or more of the following properties:
- Common REG structure for both SC-FM and OFDM.
- Common REG bundle structure for both SC-FM and OFDM.
- Common CCE structure for both SC-FDM and OFDM.

The key difference, compared to the 1^{st} or 2^{nd} CORESET) relates to the waveform supported, that is, the third CORESET supports multiple waveforms.

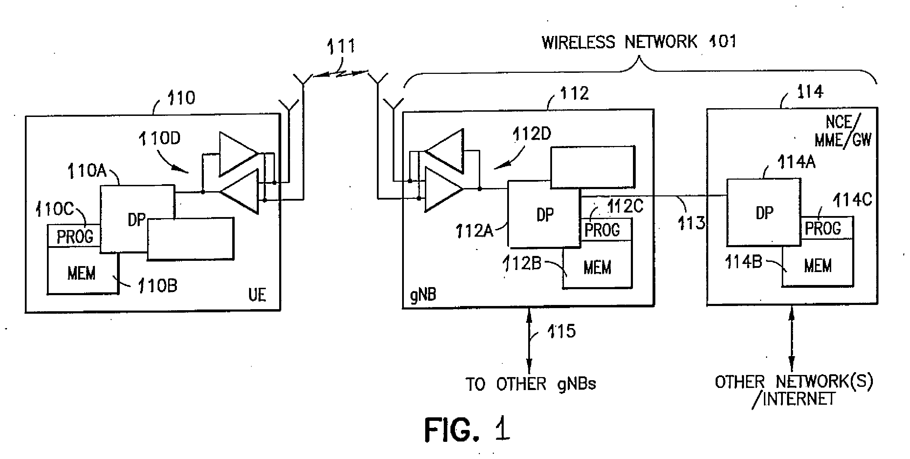

Reference is now made to Figure 1 for illustrating a simplified block diagram of various electronic devices and apparatus that are suitable for use in practicing an exemplary embodiment of the present invention. In Figure 1, a wireless network 101 is adapted for communication over a wireless link 111 with an apparatus, such as a mobile communication device, which is referred to as a UE 110, via a wireless network access node, such as a base station or relay station (which may also be known as integrated access and backhaul (IAB) node, and, more specifically, Distribution Unit (DU) part of the IAB Node), or remote radio head, and more specifically shown as a gNodeB (gNB) 112. The network 101 may include a network control element (NCE) 114, which serves as an access and mobility management function or entity (AMF or MME) and/or a serving gateway (S-GW) to a broader network, such as a public switched telephone/data network and/or the Internet.

The UE 110 includes a controller, such as a computer or a data processor (DP) 110A, a computer-readable memory medium embodied as a memory (MEM) 110B, which stores a program of computer instructions (PROG) 110C, and a suitable radio frequency (RF) transmitter and receiver 110D for bi-directional wireless communications with the gNodeB (gNB) 112 via one or more antennas. The gNodeB 112 also includes a controller, such as a computer or a data processor (DP) 112A, a computer-readable memory medium embodied as a memory (MEM) 112B that stores a program of computer instructions (PROG) 112C, and a suitable RF transmitter and receiver 112D for communication with the UE 110 via one or more antennas. The gNodeB 112 is coupled via a data/control path 113 to the NCE 114. The path 113 may be implemented as an S1 interface when the network 101 is an LTE network. The gNodeB 112 may also be coupled to another gNodeB via data/control path 115, which may be implemented as an X2 interface when the network 101 is an LTE network.

At least one of the PROGs 110C and 112C is assumed to include program instructions that, when executed by the associated DP, enable the device to operate in accordance with the exemplary embodiments of this invention. That is, the exemplary embodiments of this invention may be implemented at least in part by computer software executable by the DP 110A of the UE 110 and/or by the DP 112A of the gNodeB 112, or by hardware, or by a combination of software and hardware (and firmware).

In general, the various embodiments of the UE 110 can include, but are not limited to, cellular telephones; personal digital assistants (PDAs) having wireless communication capabilities; portable computers having wireless communication capabilities; image capture devices, such as digital cameras, having wireless communication capabilities; gaming devices having wireless communication capabilities; music storage and playback appliances having wireless communication capabilities; and Internet appliances permitting wireless Internet access and browsing, as well as portable units or terminals that incorporate combinations of such functions. UE 110 can also include a relay station (which may also be known as integrated access and backhaul (IAB) node, and, more specifically, Mobile Termination (MT) part of the IAB Node).

The computer-readable MEMs 110B, 112B, 114B may be of any type suitable to the local technical environment and may be implemented using any suitable data storage technology, such as semiconductor-based memory devices, flash memory, magnetic-memory devices and systems, optical-memory devices and systems, fixed memory and removable memory. The DPs 110A, 112A, 114A may be of any type suitable to the local technical environment, and may include one or more of general purpose computers, special purpose computers, microprocessors, digital signal processors (DSPs) and processors based on a multicore processor architecture, as non-limiting examples.

It should be noted that the various DPs 110A, 112A, 114A may be implemented as one or more processors/chips, either or both of the UE 110 and the gNodeB 112 may include more than one transmitter and/or receiver 110D, 112D, and particularly the gNodeB 112 may have its antennas mounted remotely from the other components of the gNodeB 112, such as for example tower-mounted antennas.

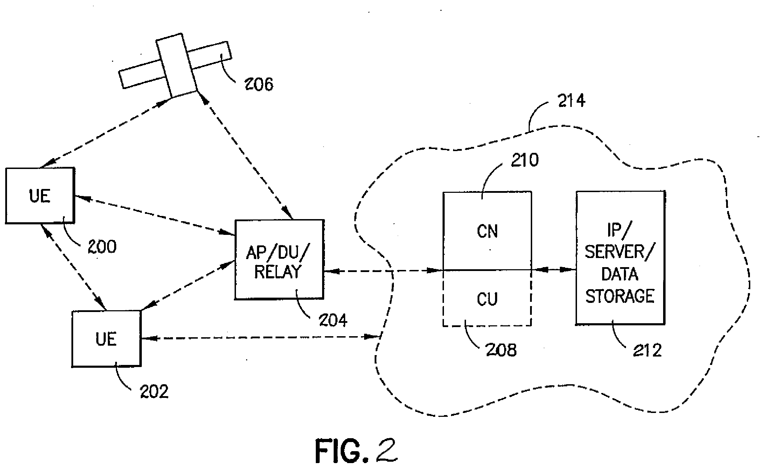

Reference is now made to Figure 2 for illustrating a simplified block diagram of various electronic devices and apparatus that are suitable for use in practicing another exemplary embodiment of the present invention. In the following, different exemplifying embodiments will be described using, as an example of an access architecture to which the embodiments may be applied, a radio access architecture based on long term evolution advanced (LTE Advanced, LTE-A) or new radio (NR, 5G), without restricting the embodiments to such an architecture, however. It is obvious for a person skilled in the art that the embodiments may also be applied to other kinds of communications networks having suitable means by adjusting parameters and procedures appropriately. Some examples of other options for suitable systems are the universal mobile telecommunications system (UMTS) radio access network (UTRAN or E-UTRAN), long term evolution (LTE, the same as E-UTRA), wireless local area network (WLAN or WiFi), worldwide interoperability for microwave access (WiMAX), Bluetooth®, personal communications services (PCS), ZigBee®, wideband code division multiple access (WCDMA), systems using ultra-wideband (UWB) technology, sensor networks, mobile ad-hoc networks (MANETs), and Internet Protocol multimedia subsystems (IMS) or any combination thereof.

Figure 2 depicts examples of simplified system architectures only showing some elements and functional entities, all being logical units, whose implementation may differ from what is shown. The connections shown in Figure 2 are logical connections; the actual physical connections may be different. It is apparent to a person skilled in the art that the system typically comprises also other functions and structures than those shown in Figure 2.

The embodiments are not, however, restricted to the system given as an example, but a person skilled in the art may apply the solution to other communication systems provided with necessary properties.

The example of Figure 2 shows a part of an exemplifying radio access network.

Figure 2 shows user devices 200 and 202 configured to be in a wireless connection on one or more communication channels in a cell with an access node (such as (e/g)NodeB) 204 providing the cell. The physical link from a user device to a/an (e/g)NodeB is called uplink or reverse link and the physical link from the (e/g)NodeB to the user device is called downlink or forward link. It should be appreciated that (e/g)NodeBs or their functionalities may be implemented by using any node, host, server, or access point, etc., entity suitable for such a usage.

A communications system typically comprises more than one (e/g)NodeB in which case the (e/g)NodeBs may also be configured to communicate with one another over links, wired or wireless, designed for the purpose. These links may be used for signaling purposes. The (e/g)NodeB is a computing device configured to control the radio resources of communication system to which it is coupled. The NodeB may also be referred to as a base station, an access point, or any other type of interfacing device including a relay station capable of operating in a wireless environment. The (e/g)NodeB includes or is coupled to transceivers. From the transceivers of the (e/g)NodeB, a connection is provided to an antenna unit that establishes bi-directional radio links to user devices. The antenna unit may comprise a plurality of antennas or antenna elements. The (e/g)NodeB is further connected to core network 210 (CN or next generation core NGC). Depending on the system, the counterpart on the CN side can be a serving gateway (S-GW, routing and forwarding user data packets), packet data network gateway (P-GW), for providing connectivity of user devices (UEs) to external packet data networks, or mobile management entity (MME), etc.

The user device (also called UE, user equipment, user terminal, terminal device, etc.) illustrates one type of an apparatus to which resources on the air interface are allocated and assigned, and thus any feature described herein with a user device may be implemented with a corresponding apparatus, such as a relay node. An example of such a relay node is an IAB node, more specifically, MT part of it communicating towards the base station.

The user device typically refers to a portable computing device that includes wireless mobile communication devices operating with or without a subscriber identification module (SIM), including, but not limited to, the following types of devices: a mobile station (mobile phone), smartphone, personal digital assistant (PDA), handset, device using a wireless modem (alarm or measurement device, etc.), laptop and/or touch screen computer, tablet, game console, notebook, and multimedia device. It should be appreciated that a user device may also be a nearly exclusive uplink only device, of which an example is a camera or video camera loading images or video clips to a network. A user device may also be a device having capability to operate in an Internet of Things (IoT) network which is a scenario in which objects are provided with the ability to transfer data over a network without requiring human-to-human or human-to-computer interaction. The user device may also utilize cloud. In some applications, a user device may comprise a small portable device with radio parts (such as a watch, earphones or eyeglasses) and the computation is carried out in the cloud. The user device (or in some embodiments an IAB node) is configured to perform one or more of user equipment functionalities. The user device may also be called a subscriber unit, mobile station, remote terminal, access terminal, user terminal or user equipment (UE) just to mention but a few names or apparatuses.

Various techniques described herein may also be applied to a cyber-physical system (CPS) (a system of collaborating computational elements controlling physical entities). CPS may enable the implementation and exploitation of massive amounts of interconnected ICT devices (sensors, actuators, processors microcontrollers, etc.) embedded in physical objects at different locations. Mobile cyber physical systems, in which the physical system in question has inherent mobility, are a subcategory of cyber-physical systems. Examples of mobile physical systems include mobile robotics and electronics transported by humans or animals.

It should be understood that, in Figure 2, user devices may include two antennas. The number of reception and/or transmission antennas may naturally vary according to a current implementation.

Additionally, although the apparatuses have been depicted as single entities, different units, processors and/or memory units (not all shown in Figure 2) may be implemented.

5G enables the use of multiple input-multiple output (MIMO) antennas, many more base stations or nodes than the LTE (a so-called small cell concept), including macro sites operating in co-operation with smaller stations and employing a variety of radio technologies depending on service needs, use cases and/or spectrum available. 5G mobile communications supports a wide range of use cases and related applications including video streaming, augmented reality, different ways of data sharing and various forms of machine type applications (such as (massive) machine-type communications (mMTC)), including vehicular safety, different sensors and real-time control. 5G is expected to have multiple radio interfaces, namely below 6GHz, cmWave and mmWave, and also being integrable with existing legacy radio access technologies, such as the LTE. Integration with the LTE may be implemented, at least in the early phase, as a system, where macro coverage is provided by the LTE and 5G radio interface access comes from small cells by aggregation to the LTE. In other words, 5G is planned to support both inter-RAT operability (such as LTE-5G) and inter-RI operability (inter-radio interface operability, such as below 6GHz ― cmWave, below 6GHz ― cmWave ― mmWave). One of the concepts considered to be used in 5G networks is network slicing in which multiple independent and dedicated virtual sub-networks (network instances) may be created within the same infrastructure to run services that have different requirements on latency, reliability, throughput and mobility.

The current architecture in LTE networks is fully distributed in the radio and fully centralized in the core network. The low latency applications and services in 5G require to bring the content close to the radio which leads to local break out and multi-access edge computing (MEC). 5G enables analytics and knowledge generation to occur at the source of the data. This approach requires leveraging resources that may not be continuously connected to a network such as laptops, smartphones, tablets and sensors. MEC provides a distributed computing environment for application and service hosting. It also has the ability to store and process content in close proximity to cellular subscribers for faster response time. Edge computing covers a wide range of technologies, such as wireless sensor networks, mobile data acquisition, mobile signature analysis, cooperative distributed peer-to-peer ad hoc networking and processing also classifiable as local cloud/fog computing and grid/mesh computing, dew computing, mobile edge computing, cloudlet, distributed data storage and retrieval, autonomic self-healing networks, remote cloud services, augmented and virtual reality, data caching, Internet of Things (massive connectivity and/or latency critical), critical communications (autonomous vehicles, traffic safety, real-time analytics, time-critical control, healthcare applications).

The communication system is also able to communicate with other networks, such as a public switched telephone network or the Internet 212, or utilize services provided by them. The communication network may also be able to support the usage of cloud services, for example, at least part of core network operations may be carried out as a cloud service (this is depicted in Figure 2 by "cloud" 214). The communication system may also comprise a central control entity, or the like, providing facilities for networks of different operators to cooperate, for example, in spectrum sharing.

Edge cloud may be brought into radio access network (RAN) by utilizing network function virtualization (NVF) and software defined networking (SDN). Using edge cloud may mean access node operations to be carried out, at least partly, in a server, host or node operationally coupled to a remote radio head or base station comprising radio parts. It is also possible that node operations will be distributed among a plurality of servers, nodes or hosts. Application of cloudRAN architecture enables RAN real time functions being carried out at the RAN side (in a distributed unit, DU 204) and non-real time functions being carried out in a centralized manner (in a centralized unit, CU 208).

It should also be understood that the distribution of labor between core network operations and base station operations may differ from that of the LTE or even be non-existent. Some other technology advancements probably to be used are Big Data and all-IP, which may change the way networks are being constructed and managed. 5G (or new radio, NR) networks are being designed to support multiple hierarchies, where MEC servers can be placed between the core and the base station or nodeB (gNB). It should be appreciated that MEC can be applied in 4G networks as well.

5G may also utilize satellite communication to enhance or complement the coverage of 5G service, for example, by providing backhauling. Possible use cases are providing service continuity for machine-to-machine (M2M) or Internet of Things (IoT) devices or for passengers on board of vehicles, or ensuring service availability for critical communications, and future railway/maritime/aeronautical communications. Satellite communication may utilize geostationary earth orbit (GEO) satellite systems, but also low earth orbit (LEO) satellite systems, in particular mega-constellations (systems in which hundreds of (nano-)satellites are deployed). Each satellite 206 in the mega-constellation may cover several satellite-enabled network entities that create on-ground cells. The on-ground cells may be created through an on-ground relay node 204 or by a gNB located on-ground or in a satellite.

It is obvious for a person skilled in the art that the depicted system is only an example of a part of a radio access system and in practice, the system may comprise a plurality of (e/g)NodeBs, the user device may have an access to a plurality of radio cells and the system may also comprise other apparatuses, such as physical layer relay nodes or other network elements, etc. At least one of the (e/g)NodeBs or may be a Home (e/g)nodeB. Additionally, in a geographical area of a radio communication system, a plurality of different kinds of radio cells as well as a plurality of radio cells may be provided. Radio cells may be macro cells (or umbrella cells) which are large cells, usually having a diameter of up to tens of kilometers, or smaller cells such as micro-, femto- or picocells. The (e/g)NodeBs of Figure 2 may provide any kind of these cells. A cellular radio system may be implemented as a multilayer network including several kinds of cells. Typically, in multilayer networks, one access node provides one kind of a cell or cells, and thus a plurality of (e/g)NodeBs are required to provide such a network structure.

For fulfilling the need for improving the deployment and performance of communication systems, the concept of "plug-and-play" (e/g)NodeBs has been introduced. Typically, a network which is able to use "plug-and-play" (e/g)Node Bs, includes, in addition to Home (e/g)NodeBs (H(e/g)nodeBs), a home node B gateway, or HNB-GW (not shown in Figure 2). An HNB Gateway (HNB-GW), which is typically installed within an operator's network may aggregate traffic from a large number of HNBs back to a core network.

In accordance with the present invention, the gNB has full flexibility to select between an orthogonal frequency division multiplex physical downlink control channel, supporting high UE multiplexing capacity, and single carrier waveform physical downlink control channel with improved coverage and power efficiency. There is a simple selection between orthogonal frequency division multiplex physical downlink control channel and single carrier waveform physical downlink control channel, as both may share the same resources.

There is also smooth coexistence at the user equipment, with common fast Fourier transform processing, at least partially, and common channel estimation, at least in some embodiments.

The invention supports legacy OFDM and a new SC waveform.

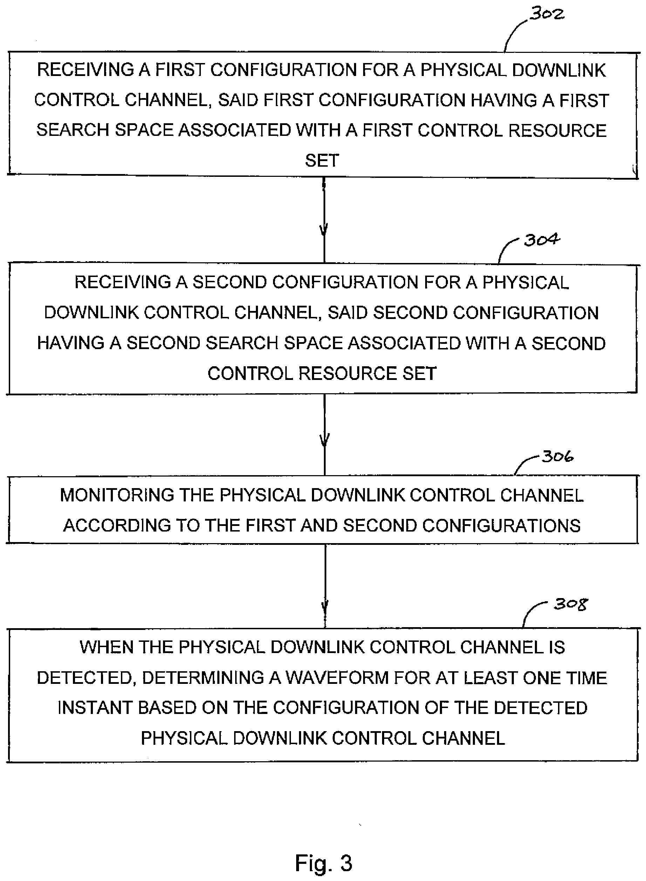

Figure 3 is a flow chart illustrating a method performed by a user equipment in accordance with the present disclosure. In block 302, the user equipment receives a first configuration for a physical downlink control channel, said first configuration having a first search space associated with a first control resource set. In block 304, the user equipment receives a second configuration for a physical downlink control channel, said second configuration having a second search space associated with a second control resource set. In block 306, the user equipment monitors the physical downlink control channel according to the first and second configurations. And, in block 308, when the physical downlink control channel is detected, the user equipment determines a waveform for at least one time instant based on the configuration of the detected physical downlink control channel.

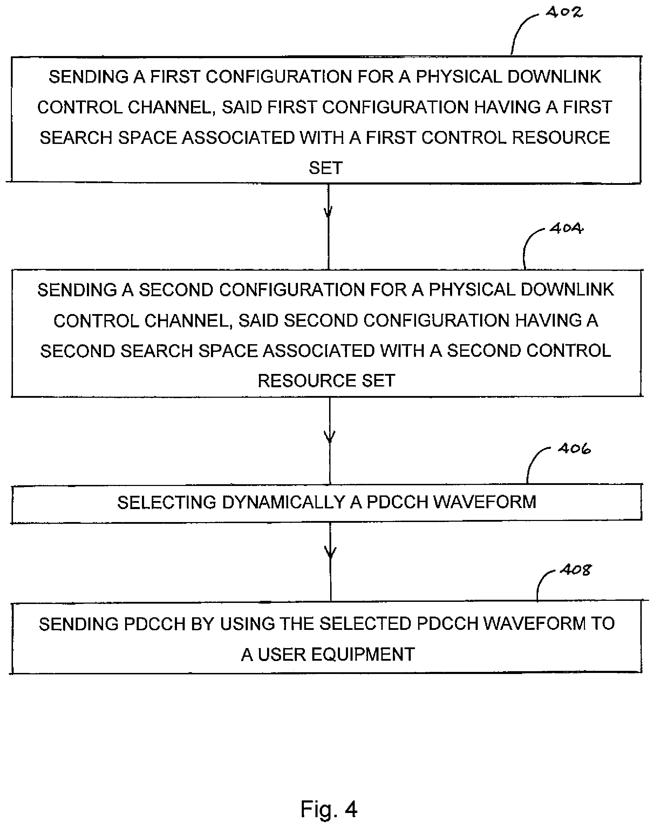

Figure 4 is a flow chart illustrating a method performed by a base station in accordance with the present disclosure. In block 402, the base station sends a first configuration for a physical downlink control channel, said first configuration having a first search space associated with a first control resource set. In block 404, the base station sends a second configuration for a physical downlink control channel, said second configuration having a second search space associated with a second control resource set. In block 406, the base station selects dynamically a PDCCH waveform. And, in block 1108, the base station sends PDCCH by using the selected PDCCH waveform to a user equipment.

In general, the various exemplary embodiments may be implemented in hardware or special purpose circuits, software, logic or any combination thereof. For example, some aspects may be implemented in hardware, while other aspects may be implemented in firmware or software, which may be executed by a controller, microprocessor or other computing device, although the invention is not limited thereto.

While various aspects of the exemplary embodiments of this invention may be illustrated and described as block diagrams, flow charts, or using some other pictorial representation, it is well understood that these blocks, apparatus, systems, techniques or methods described herein may be implemented in, as non-limiting examples, hardware, software, firmware, special purpose circuits or logic, general purpose hardware or controller or other computing devices, or some combination thereof.

It should thus be appreciated that at least some aspects of the exemplary embodiments of the inventions may be practiced in various components, such as integrated circuit chips and modules, and that the exemplary embodiments of this invention may be realized in an apparatus that is embodied as an integrated circuit. The integrated circuit, or circuits, may comprise circuitry, as well as possibly firmware, for embodying at least one or more of a data processor or data processors, a digital signal processor or processors, baseband circuitry and radio frequency circuitry that are configurable so as to operate in accordance with the exemplary embodiments of this invention.

Various modifications and adaptations to the foregoing exemplary embodiments of this invention may become apparent to those skilled in the relevant arts in view of the foregoing description, when read in conjunction with the accompanying drawings. For example, while the exemplary embodiments have been described above in the context of advancements to the 5G NR system, it should be appreciated that the exemplary embodiments of this invention are not limited for use with only this one particular type of wireless communication system. The exemplary embodiments of the invention presented herein are explanatory and not exhaustive or otherwise limiting of the scope of the invention. The invention is defined by the appended claims.

The following abbreviations have been used in the preceding discussion:
- AL: Aggregation Level
- CCE: Control Channel Element
- CORESET: COntrol RESource SET
- CP-OFDM: Cyclic Prefix OFDM
- DCI: Downlink Control Information
- DFT: Discrete Fourier Transform
- DL: Downlink
- DMRS: DeModulation Reference Signal
- DU: Distributed Unit
- FDM: Frequency Division Multiplex
- FFT: Fast Fourier Transform
- GHz: Gigahertz
- gNB: gNodeB (5G Base Station)
- IAB: Integrated Access and Backhaul
- MT: Mobile Termination
- MUX: Multiplex
- NR: New Radio (5G)
- OFDM: Orthogonal Frequency Division Multiplex
- PA: Power Amplifier
- PAPR: Peak-to-Average Power Ratio
- PAR: Peak-to-Average Ratio
- PBCH: Physical Broadcast Channel
- PDCCH: Physical Downlink Control Channel
- PDSCH: Physical Downlink Shared Channel
- PUSCH: Physical Uplink Shared Channel
- RAN: Radio Access Network
- REG: Resource Element Group
- RF: Radio Frequency
- RNTI: Radio Network Temporary Identifier
- RX: Receive
- SC: Single Carrier
- SS: Synchronization Signal
- SS/PBCH: Synchronization Signal/Physical Broadcast Channel
- TDM: Time Division Multiplex
- TX: Transmit
- UE: User Equipment
- UL: Uplink
- WI: Work Item
- 3GPP: 3^{rd} Generation Partnership Project
- 5G: 5^{th} Generation

The terminology used herein is for the purpose of describing particular embodiments only and is not intended to be limiting of the invention. As used herein, the singular forms "a", "an", and "the" are intended to include the plural forms as well, unless the context clearly indicates otherwise. It will be further understood that the terms "comprises" and/or "comprising", when used in this specification, specify the presence of stated features, integers, steps, operations, elements, and/or components, but do not preclude the presence or addition of one or more other features, integers, steps, operations, elements, components, and/or groups thereof.

## Claims

1. A method performed by an apparatus, and comprising:
receiving (302) a first configuration for a physical downlink control channel with an orthogonal frequency division multiplexing format, said first configuration having a first search space associated with a first control resource set;
receiving (304) a second configuration for a physical downlink control channel with a single-carrier format, said second configuration having a second search space associated with a second control resource set;
monitoring (306) a physical downlink control channel according to the first and second configurations; and
when the physical downlink control channel having the first or second configuration is detected, determining (308) a waveform for at least one time instant based on a configuration of the detected physical downlink control channel, wherein the determined waveform is an orthogonal frequency division multiplexing waveform when the detected physical downlink control channel has the first configuration and the determined waveform is a single-carrier waveform when the detected physical downlink control channel has the second configuration, and
wherein resource elements occupied by a demodulation reference signal are common for the first configuration and the second configuration.

2. An apparatus comprising:
means for receiving (302) a first configuration, with an orthogonal frequency division multiplexing format, for a physical downlink control channel with an orthogonal frequency division multiplexing format, said first configuration having a first search space associated with a first control resource set;
means for receiving (304) a second configuration for a physical downlink control channel with a single-carrier format, said second configuration having a second search space associated with a second control resource set;
means for monitoring (306) a physical downlink control channel according to the first and second configurations; and
means for determining (308) a waveform for at least one time instant based on a configuration of the detected physical downlink control channel when the physical downlink control channel having the first or second configuration is detected, wherein the determined waveform is an orthogonal frequency division multiplexing waveform when the detected physical downlink control channel has the first configuration and the determined waveform is a single-carrier waveform when the detected physical downlink control channel has the second configuration, and
wherein resource elements occupied by a demodulation reference signal are common for the first configuration and the second configuration.

3. The apparatus as claimed in claim 2, wherein resources for the first configuration and resources for the second configuration overlap in at least one of time and frequency.

4. The apparatus as claimed in any of claims 2-3, wherein the first search space and the second search space are associated with a third control resource set, wherein the third search space set supports multiple waveforms and the first search space and the second search space are associated with different ones of the waveforms supported by the third search space set.

5. The apparatus as claimed in any of claims 2-4, wherein the first control resource set and the second control resource set occupy the same resource elements, and/or cover at least two orthogonal frequency division multiplex symbol durations.

6. The apparatus as claimed in any of claims 2-5, wherein at least one of the following applies:
a resource elements group structure is common for the first configuration and the second configuration; and
a control channel element structure is common for the first configuration and the second configuration.

7. The apparatus as claimed in any of claims 2-6, wherein the first configuration corresponds to a legacy physical downlink control channel configuration **characterized by** at least one of:
frequency division multiplexing between downlink control information and demodulation reference signal;
frequency division multiplexing of modulation symbols carrying downlink control information;
precoder cycling with a predefined granularity in frequency; and
interleaved control channel element to resource element group mapping in frequency.

8. The apparatus as claimed in any of claims 2-7, wherein the second configuration corresponding to the single-carrier format is **characterized by** using only time division multiplexing of modulation symbols carrying downlink control information.

9. The apparatus as claimed in any of claims 2-8, wherein the determined waveform relates to at least one of:
physical downlink control channel;
physical downlink shared channel;
physical uplink shared channel; and
physical uplink control channel.

10. The apparatus as claimed in claim 9, wherein the determined waveform for physical uplink shared channel, physical downlink shared channel or physical uplink control channel is explicitly indicated based on received physical downlink control channel.

11. A method performed by an apparatus, and comprising:
sending (402) a first configuration for a physical downlink control channel with an orthogonal frequency division multiplexing format, said first configuration having a first search space associated with a first control resource set;
sending (404) a second configuration for a physical downlink control channel with a single-carrier format, said second configuration having a second search space associated with a second control resource set;
selecting (406) dynamically a physical downlink control channel waveform; and
sending (408) a physical downlink control channel by using the selected physical downlink control channel waveform to a user equipment, wherein the selected waveform is an orthogonal frequency division multiplexing waveform when the physical downlink control channel having the first configuration is sent and the selected waveform is a single-carrier waveform when the physical downlink control channel having the second configuration is sent, and
wherein resource elements occupied by a demodulation reference signal are common for the first configuration and the second configuration.

12. An apparatus comprising:
means for sending (402) a first configuration for a physical downlink control channel with an orthogonal frequency division multiplexing format, said first configuration having a first search space associated with a first control resource set;
means for sending (404) a second configuration for a physical downlink control channel with a single-carrier format, said second configuration having a second search space associated with a second control resource set;
means for selecting (406) dynamically a physical downlink control channel waveform; and
means for sending (408) a physical downlink control channel by using the selected physical downlink control channel waveform to a user equipment, wherein the selected waveform is an orthogonal frequency division multiplexing waveform when the physical downlink control channel having the first configuration is sent and the selected waveform is a single-carrier waveform when the physical downlink control channel having the second configuration is sent, and
wherein resource elements occupied by a demodulation reference signal are common for the first configuration and the second configuration.

13. The apparatus as claimed in claim 12, wherein resources for the first configuration and resources for the second configuration overlap in at least one of time and frequency; and wherein the second configuration corresponding to the single-carrier format is **characterized by** using only time division multiplexing of modulation symbols carrying downlink control information.

14. The method as claimed in any of claims 12-13, wherein the first control resource set and the second control resource set occupy the same resource elements, and/or cover at least two orthogonal frequency division multiplex symbol durations.

## Patentansprüche

1. Verfahren, das von einer Vorrichtung durchgeführt wird und Folgendes umfasst:
Empfangen (302) einer ersten Auslegung für einen physischen Downlinksteuerkanal mit einem orthogonalen Frequenzmultiplexingformat, wobei die erste Auslegung einen ersten Suchraum aufweist, der mit einem ersten Steuerressourcensatz verknüpft ist;
Empfangen (304) einer zweiten Auslegung für einen physischen Downlinksteuerkanal mit einem Einzelträgerformat, wobei die zweite Auslegung einen zweiten Suchraum aufweist, der mit einem zweiten Steuerressourcensatz verknüpft ist;
Überwachen (306) eines physischen Downlinksteuerkanals gemäß der ersten und der zweiten Auslegung und
wenn der physische Downlinksteuerkanal, der die erste oder die zweite Auslegung aufweist, detektiert wird, Bestimmen (308) einer Wellenform für mindestens eine Zeitinstanz auf Basis einer Auslegung des detektierten physischen Downlinksteuerkanals, wobei die bestimmte Wellenform eine orthogonale Frequenzmultiplexingwellenform ist, wenn der detektierte physische Downlinksteuerkanal die erste Auslegung aufweist, und die detektierte Wellenform eine Einzelträgerwellenform ist, wenn der detektierte physische Downlinksteuerkanal die zweite Auslegung aufweist, und
wobei Ressourcenelemente, die von einem Demodulationsreferenzsignal belegt werden, der ersten Auslegung und der zweiten Auslegung gemein sind.

2. Vorrichtung, die Folgendes umfasst:
Mittel zum Empfangen (302) einer ersten Auslegung mit einem orthogonalen Frequenzmultiplexingformat für einen physischen Downlinksteuerkanal mit einem orthogonalen Frequenzmultiplexingformat, wobei die erste Auslegung einen ersten Suchraum aufweist, der mit einem ersten Steuerressourcensatz verknüpft ist;
Mittel zum Empfangen (304) einer zweiten Auslegung für einen physischen Downlinksteuerkanal mit einem Einzelträgerformat, wobei die zweite Auslegung einen zweiten Suchraum aufweist, der mit einem zweiten Steuerressourcensatz verknüpft ist;
Mittel zum Überwachen (306) eines physischen Downlinksteuerkanals gemäß der ersten und der zweiten Auslegung und
Mittel zum Bestimmen (308) einer Wellenform für mindestens eine Zeitinstanz auf Basis einer Auslegung des detektierten physischen Downlinksteuerkanals, wenn der physische Downlinksteuerkanal, der die erste oder die zweite Auslegung aufweist, detektiert wird, wobei die bestimmte Wellenform eine orthogonale Frequenzmultiplexingwellenform ist, wenn der detektierte physische Downlinksteuerkanal die erste Auslegung aufweist, und die detektierte Wellenform eine Einzelträgerwellenform ist, wenn der detektierte physische Downlinksteuerkanal die zweite Auslegung aufweist, und
wobei Ressourcenelemente, die von einem Demodulationsreferenzsignal belegt werden, der ersten Auslegung und der zweiten Auslegung gemein sind.

3. Vorrichtung nach Anspruch 2, wobei sich Ressourcen für die erste Auslegung und Ressourcen für die zweite Auslegung mit Bezug auf mindestens eines von Zeit und Frequenz überlappen.

4. Vorrichtung nach einem der Ansprüche 2-3, wobei der erste Suchraum und der zweite Suchraum mit einem dritten Steuerressourcensatz verknüpft sind, wobei der dritte Suchraumsatz mehrere Wellenformen unterstützt und der erste Suchraum und der zweite Suchraum mit verschiedenen der Wellenformen, die vom dritten Suchraumsatz unterstützt werden, verknüpft sind.

5. Vorrichtung nach einem der Ansprüche 2-4, wobei der erste Steuerressourcensatz und der zweite Steuerressourcensatz dieselben Ressourcenelemente belegen und/oder mindestens zwei orthogonale Frequenzmultiplexingsymbollaufzeiten abdecken.

6. Vorrichtung nach einem der Ansprüche 2-5, wobei mindestens eines von Folgendem gilt:
eine Ressourcenelementgruppenstruktur ist der ersten Auslegung und der zweiten Auslegung gemein und
eine Steuerkanalelementstruktur ist der ersten Auslegung und der zweiten Auslegung gemein.

7. Vorrichtung nach einem der Ansprüche 2-6, wobei die erste Auslegung einer alten physischen Downlinksteuerkanalauslegung entspricht, die durch mindestens eines von Folgendem gekennzeichnet ist:
Frequenzmultiplexing zwischen Downlinksteuerinformationen und Demodulationsreferenzsignal;
Frequenzmultiplexing von Modulationssymbolen mit Downlinksteuerinformationen;
Vorcodiererumschaltung mit einer vordefinierten Granularität hinsichtlich Frequenz und
verschachtelte Steuerkanalelement-Ressourcenelementgruppe-Zuordnung hinsichtlich Frequenz.

8. Vorrichtung nach einem der Ansprüche 2-7, wobei die zweite Auslegung, die dem Einzelträgerformat entspricht, **dadurch gekennzeichnet ist, dass** sie nur ein Zeitmultiplexing von Modulationssymbolen mit Downlinksteuerinformationen verwendet.

9. Vorrichtung nach einem der Ansprüche 2-8, wobei die bestimmte Wellenform mindestens eines von Folgendem betrifft:
physischer Downlinksteuerkanal;
gemeinsam verwendeter physischer Downlinkkanal;
gemeinsam verwendeter physischer Uplinkkanal und
physischer Uplinksteuerkanal.

10. Vorrichtung nach Anspruch 9, wobei die bestimmte Wellenform für den gemeinsam verwendeten physischen Uplinkkanal, den gemeinsam verwendeten physischen Downlinkkanal oder den physischen Uplinksteuerkanal auf Basis eines empfangenen physischen Downlinksteuerkanals explizit angegeben ist.

11. Verfahren, das von einer Vorrichtung durchgeführt wird und Folgendes umfasst:
Senden (402) einer ersten Auslegung für einen physischen Downlinksteuerkanal mit einem orthogonalen Frequenzmultiplexingformat, wobei die erste Auslegung einen ersten Suchraum aufweist, der mit einem ersten Steuerressourcensatz verknüpft ist;
Senden (404) einer zweiten Auslegung für einen physischen Downlinksteuerkanal mit einem Einzelträgerformat, wobei die zweite Auslegung einen zweiten Suchraum aufweist, der mit einem zweiten Steuerressourcensatz verknüpft ist;
dynamisches Auswählen (406) einer physischen Downlinksteuerkanalwellenform und
Senden (408) eines physischen Downlinksteuerkanals unter Verwendung der ausgewählten physischen Downlinksteuerkanalwellenform an eine Teilnehmereinrichtung, wobei die ausgewählte Wellenform eine orthogonale Frequenzmultiplexingwellenform ist, wenn der physische Downlinksteuerkanal, der die erste Auslegung aufweist, gesendet wird, und die ausgewählte Wellenform eine Einzelträgerwellenform ist, wenn der physische Downlinksteuerkanal, der die zweite Auslegung aufweist, gesendet wird, und
wobei Ressourcenelemente, die von einem Demodulationsreferenzsignal belegt werden, der ersten Auslegung und der zweiten Auslegung gemein sind.

12. Vorrichtung, die Folgendes umfasst:
Mittel zum Senden (402) einer ersten Auslegung für einen physischen Downlinksteuerkanal mit einem orthogonalen Frequenzmultiplexingformat, wobei die erste Auslegung einen ersten Suchraum aufweist, der mit einem ersten Steuerressourcensatz verknüpft ist;
Mittel zum Senden (404) einer zweiten Auslegung für einen physischen Downlinksteuerkanal mit einem Einzelträgerformat, wobei die zweite Auslegung einen zweiten Suchraum aufweist, der mit einem zweiten Steuerressourcensatz verknüpft ist;
Mittel zum dynamischen Auswählen (406) einer physischen Downlinksteuerkanalwellenform und
Mittel zum Senden (408) eines physischen Downlinksteuerkanals unter Verwendung der ausgewählten physischen Downlinksteuerkanalwellenform an eine Teilnehmereinrichtung, wobei die ausgewählte Wellenform eine orthogonale Frequenzmultiplexingwellenform ist, wenn der physische Downlinksteuerkanal, der die erste Auslegung aufweist, gesendet wird, und die ausgewählte Wellenform eine Einzelträgerwellenform ist, wenn der physische Downlinksteuerkanal, der die zweite Auslegung aufweist, gesendet wird, und
wobei Ressourcenelemente, die von einem Demodulationsreferenzsignal belegt werden, der ersten Auslegung und der zweiten Auslegung gemein sind.

13. Vorrichtung nach Anspruch 12, wobei sich Ressourcen für die erste Auslegung und Ressourcen für die zweite Auslegung mit Bezug auf mindestens eines von Zeit und Frequenz überlappen und wobei die zweite Auslegung, die dem Einzelträgerformat entspricht, **dadurch gekennzeichnet ist, dass** sie nur ein Zeitmultiplexing von Modulationssymbolen mit Downlinksteuerinformationen verwendet.

14. Verfahren nach einem der Ansprüche 12-13, wobei der erste Steuerressourcensatz und der zweite Steuerressourcensatz dieselben Ressourcenelemente belegen und/oder mindestens zwei orthogonale Frequenzmultiplexingsymbollaufzeiten abdecken.

## Revendications

1. Procédé réalisé par un appareil, et comprenant
la réception (302) d'une première configuration pour un canal de commande de liaison descendante physique ayant un format de multiplexage par répartition orthogonale de la fréquence, ladite première configuration ayant un premier espace de recherche associé à un premier ensemble de ressources de commande ;
la réception (304) d'une seconde configuration pour un canal de commande de liaison descendante physique ayant un format à porteuse unique, ladite seconde configuration ayant un second espace de recherche associé à un deuxième ensemble de ressources de commande ;
la surveillance (306) d'un canal de commande de liaison descendante physique selon les première et seconde configurations ; et
lorsque le canal de commande de liaison descendante physique ayant la première ou la seconde configuration est détecté, la détermination (308) d'une forme d'onde pendant au moins un instant temporel sur la base d'une configuration du canal de commande de liaison descendante physique détecté, dans lequel la forme d'onde déterminée est une forme d'onde de multiplexage par répartition orthogonale de la fréquence lorsque le canal de commande de liaison descendante physique détecté possède la première configuration et la forme d'onde déterminée est une forme d'onde à porteuse unique lorsque le canal de commande de liaison descendante physique détecté possède la seconde configuration, et
dans lequel des éléments de ressource occupés par un signal de référence de démodulation sont communs pour la première configuration et la seconde configuration.

2. Appareil comprenant :
des moyens pour recevoir (302) une première configuration, ayant un format de multiplexage par répartition orthogonale de la fréquence, pour un canal de commande de liaison descendante physique ayant un format de multiplexage par répartition orthogonale de la fréquence, ladite première configuration ayant un premier espace de recherche associé à un premier ensemble de ressources de commande ;
des moyens pour recevoir (304) une seconde configuration pour un canal de commande de liaison descendante physique ayant un format à porteuse unique, ladite seconde configuration ayant un second espace de recherche associé à un deuxième ensemble de ressources de commande ;
des moyens pour surveiller (306) un canal de commande de liaison descendante physique selon les première et seconde configurations ; et
des moyens pour déterminer (308) une forme d'onde pendant au moins un instant temporel sur la base d'une configuration du canal de commande de liaison descendante physique détecté lorsque le canal de commande de liaison descendante physique ayant la première ou la seconde configuration est détecté, dans lequel la forme d'onde déterminée est une forme d'onde de multiplexage par répartition orthogonale de la fréquence lorsque le canal de commande de liaison descendante physique détecté possède la première configuration et la forme d'onde déterminée est une forme d'onde à porteuse unique lorsque le canal de commande de liaison descendante physique détecté possède la seconde configuration, et
dans lequel des éléments de ressource occupés par un signal de référence de démodulation sont communs pour la première configuration et la seconde configuration.

3. Appareil selon la revendication 2, dans lequel des ressources pour la première configuration et des ressources pour la seconde configuration se chevauchent dans au moins l'un parmi le temps et la fréquence.

4. Appareil selon l'une quelconque des revendications 2 à 3, dans lequel le premier espace de recherche et le second espace de recherche sont associés à un troisième ensemble de ressources de commande, dans lequel le troisième ensemble d'espace de recherche prend en charge de multiples formes d'onde et le premier espace de recherche et le second espace de recherche sont associés à différentes formes d'onde parmi les formes d'onde prises en charge par le troisième ensemble d'espace de recherche.

5. Appareil selon l'une quelconque des revendications 2 à 4, dans lequel le premier ensemble de ressources de commande et le deuxième ensemble de ressources de commande occupent les mêmes éléments de ressources, et/ou recouvrent au moins deux durées de symboles en multiplex par répartition orthogonale de la fréquence.

6. Appareil selon l'une quelconque des revendications 2 à 5, dans lequel au moins l'un parmi ce qui suit s'applique :
une structure de groupe d'éléments de ressources est commune pour la première configuration et la seconde configuration ; et
une structure d'élément de canal de commande est commune pour la première configuration et la seconde configuration.

7. Appareil selon l'une quelconque des revendications 2 à 6, dans lequel la première configuration correspond à une configuration de canal de commande de liaison descendante physique héritée **caractérisée par** au moins l'un parmi :
un multiplexage par répartition de la fréquence entre des informations de commande de liaison descendante et un signal de référence de démodulation ;
un multiplexage par répartition de la fréquence de symboles de modulation transportant des informations de commande de liaison descendante ;
un cyclage de précodeur ayant une granularité en fréquence prédéfinie ; et
un élément de canal de commande entrelacé sur un mappage en fréquence de groupe d'éléments de ressource.

8. Appareil selon l'une quelconque des revendications 2 à 7, dans lequel la seconde configuration correspondant au format à porteuse unique est **caractérisée par** l'utilisation de seulement un multiplexage par répartition dans le temps de symboles de modulation transportant des informations de commande de liaison descendante.

9. Appareil selon l'une quelconque des revendications 2 à 8, dans lequel la forme d'onde déterminée se rapporte à au moins l'un parmi :
un canal de commande de liaison descendante physique ;
un canal partagé de liaison descendante physique ;
un canal partagé de liaison montante physique ; et
un canal de commande de liaison montante physique.

10. Appareil selon la revendication 9, dans lequel la forme d'onde déterminée pour un canal partagé de liaison montante physique, un canal partagé de liaison descendante physique ou un canal de commande de liaison montante physique est explicitement indiquée sur la base d'un canal de commande de liaison descendante physique reçu.

11. Procédé réalisé par un appareil, et comprenant l'envoi (402) d'une première configuration pour un canal de commande de liaison descendante physique ayant un format de multiplexage par répartition orthogonale de la fréquence, ladite première configuration ayant un premier espace de recherche associé à un premier ensemble de ressources de commande ;
l'envoi (404) d'une seconde configuration pour un canal de commande de liaison descendante physique ayant un format à porteuse unique, ladite seconde configuration ayant un second espace de recherche associé à un deuxième ensemble de ressources de commande ;
la sélection (406), de manière dynamique, d'une forme d'onde de canal de commande de liaison descendante physique ; et
l'envoi (408) d'un canal de commande de liaison descendante physique, en utilisant la forme d'onde de canal de commande de liaison descendante physique sélectionnée, à un équipement utilisateur, dans lequel la forme d'onde sélectionnée est une forme d'onde de multiplexage par répartition orthogonale de la fréquence lorsque le canal de commande de liaison descendante physique ayant la première configuration est envoyé et la forme d'onde sélectionnée est une forme d'onde à porteuse unique lorsque le canal de commande de liaison descendante physique ayant la seconde configuration est envoyé, et
dans lequel des éléments de ressource occupés par un signal de référence de démodulation sont communs pour la première configuration et la seconde configuration.

12. Appareil comprenant :
des moyens pour envoyer (402) une première configuration pour un canal de commande de liaison descendante physique ayant un format de multiplexage par répartition orthogonale de la fréquence, ladite première configuration ayant un premier espace de recherche associé à un premier ensemble de ressources de commande ;
des moyens pour envoyer (404) une seconde configuration pour un canal de commande de liaison descendante physique ayant un format à porteuse unique, ladite seconde configuration ayant un second espace de recherche associé à un deuxième ensemble de ressources de commande ;
des moyens pour sélectionner (406), de manière dynamique, une forme d'onde de canal de commande de liaison descendante physique ; et
des moyens pour envoyer (408) un canal de commande de liaison descendante physique, en utilisant la forme d'onde de canal de commande de liaison descendante physique sélectionnée, à un équipement utilisateur, dans lequel la forme d'onde sélectionnée est une forme d'onde de multiplexage par répartition orthogonale de la fréquence lorsque le canal de commande de liaison descendante physique ayant la première configuration est envoyé et la forme d'onde sélectionnée est une forme d'onde à porteuse unique lorsque le canal de commande de liaison descendante physique ayant la seconde configuration est envoyé, et
dans lequel des éléments de ressource occupés par un signal de référence de démodulation sont communs pour la première configuration et la seconde configuration.

13. Appareil selon la revendication 12, dans lequel des ressources pour la première configuration et des ressources pour la seconde configuration se chevauchent dans au moins l'un parmi le temps et la fréquence ; et dans lequel la seconde configuration correspondant au format à porteuse unique est **caractérisée par** l'utilisation de seulement un multiplexage par répartition dans le temps de symboles de modulation transportant des informations de commande de liaison descendante.

14. Procédé selon l'une quelconque des revendications 12 et 13, dans lequel le premier ensemble de ressources de commande et le deuxième ensemble de ressources de commande occupent les mêmes éléments de ressources, et/ou recouvrent au moins deux durées de symboles en multiplex par répartition orthogonale de la fréquence.
